(19) Europäisches Patentamt
European Patent Office
Office européen des brevets

(11) **EP 3 980 668 B1**

(12) **EUROPÄISCHE PATENTSCHRIFT**

(45) Veröffentlichungstag und Bekanntmachung des Hinweises auf die Patenterteilung:
**24.01.2024 Patentblatt 2024/04**

(21) Anmeldenummer: **20731821.3**

(22) Anmeldetag: **04.06.2020**

(51) Internationale Patentklassifikation (IPC):
*F16H 19/04* (2006.01)   *F16H 25/18* (2006.01)
*F16H 31/00* (2006.01)   *F16H 25/12* (2006.01)
*B60N 2/06* (2006.01)   *F16H 25/20* (2006.01)

(52) Gemeinsame Patentklassifikation (CPC):
**B60N 2/067; F16H 19/04; F16H 25/12; F16H 25/18; F16H 31/007**

(86) Internationale Anmeldenummer:
**PCT/EP2020/065453**

(87) Internationale Veröffentlichungsnummer:
**WO 2020/245255 (10.12.2020 Gazette 2020/50)**

(54) **LINEARANTRIEB, LÄNGSVERSTELLEINHEIT EINES SITZES UND KRAFTFAHRZEUG**

LINEAR ACTUATOR, LONGITUDINAL ADJUSTMENT DEVICE OF A SEAT AND MOTOR VEHICLE

ENTRAINEMENT LINÉAIRE, DISPOSITIF DE RÉGLAGE LONGITUDINAL D'UN SIÈGE ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2019 EP 19178264**

(43) Veröffentlichungstag der Anmeldung:
**13.04.2022 Patentblatt 2022/15**

(73) Patentinhaber: **IMS Gear SE & Co. KGaA**
**78166 Donaueschingen (DE)**

(72) Erfinder:
• **MITTELBACH, Marcel**
**79859 Schluchsee (DE)**
• **TEICHMANN, Robin**
**78467 Konstanz (DE)**

(74) Vertreter: **Westphal, Mussgnug & Partner Patentanwälte mbB**
**Am Riettor 5**
**78048 Villingen-Schwenningen (DE)**

(56) Entgegenhaltungen:
EP-A1- 0 482 827     EP-A1- 0 612 935
EP-A1- 0 879 976     EP-A1- 2 541 098
EP-B1- 0 612 935     EP-B1- 2 541 098
WO-A1-2005/032878     WO-A1-2008/028540
DE-A1- 19 932 046

**Beschreibung**

Die vorliegende Erfindung betrifft einen Linearantrieb mit den Merkmalen des Anspruchs 1, eine Längsverstelleinheit für einen Sitz mit den Merkmalen des Anspruchs 21 und ein Kraftfahrzeug mit den Merkmalen des Anspruchs 22.

Linearantriebe sind aus dem Stand der Technik in unterschiedlichen Ausgestaltungen vorbekannt und werden verbreitet als Längsverstelleinheiten zum Verstellen der Position eines Sitzes in Kraftfahrzeugen verwendet. Längsverstelleinheiten wirken typischerweise mit einer an einem Chassis festgelegten Unterschiene und einer innerhalb dieser angeordneten Oberschiene zusammen, wobei die Oberschiene durch die Längsverstelleinheit motorisch verfahrbar ist und mit dem Sitz gekoppelt ist. Das Verstellen der Oberschiene durch die Längsverstelleinheit erfolgt im Stand der Technik typischer Weise mittels einer Spindel, welche innerhalb der Oberschiene angeordnet ist und an ihrem jeweiligen ersten Ende und zweiten Ende abgestützt ist.

Derartige Längsverstelleinheiten sind beispielsweise aus der DE 36 40 197 A1, DE 42 08 948 C2, DE 196 42 655 C2, DE 198 15 283 A1, DE 10 2004 013 009 A1 und DE 10 2006 052 936 A1 bekannt.

Aus der EP 0 612 935 A1 ist ein weiterer Linearantrieb vorbekannt, wobei ein Bewegungs-Umwandlungsmechanismus verwendet wird, um bewegliche Platten zu bewegen.

Aufgrund der hohen Anforderungen an einen Linearantrieb, welcher neben der Verstellfunktion als Längsverstelleinheit auch eine Unfallsicherheit gewährleisten muss, weisen derartige Linearantriebe unterschiedliche Bauformen auf, die unterschiedliche Fertigungsmethoden und Verfahren erfordern. Es hat sich gezeigt, dass eine spielfreie Linearbewegung nur mit hohem Aufwand zu realisieren ist und dass die Bruchlasten nur aufwändig anzupassen sind. Auch neuartige Innenraumkonzepte von Kraftfahrzeugen fordern neben der Unfallsicherheit größere Verfahrwege und höhere Verfahrgeschwindigkeiten. Eine weitere Steigerung der Verfahrgeschwindigkeit von in der Vergangenheit bewährten Linearantrieben mit einer Spindel ist nur bedingt möglich.

Hier setzt die vorliegende Erfindung an.

Der Erfindung liegt die Aufgabe zugrunde, einen verbesserten Linearantrieb vorzuschlagen, der in zweckmäßiger Weise die aus dem Stand der Technik bekannten Nachteile beseitigt. Weiterhin soll ein Linearantrieb mit einer besonders kompakten Bauweise angegeben werden, welche eine nahezu spielfreie Linearbewegung bei gleichzeitiger variabler und anpassbarer Bruchlast ermöglicht. Darüber hinaus soll mit dem erfindungsgemäßen Linearantrieb eine hohe Verstellgeschwindigkeit realisiert werden können.

Diese Aufgaben werden durch einen Linearantrieb mit den Merkmalen des Anspruchs 1, eine Längsverstelleinheit mit den Merkmalen des Patentanspruchs 21 sowie mit einem Kraftfahrzeug mit den Merkmalen des Patentanspruchs 22 gelöst.

Weitere vorteilhafte Ausgestaltungen der Erfindung werden in den Unteransprüchen angegeben.

Der erfindungsgemäße Linearantrieb mit den Merkmalen des Patentanspruchs 1 weist eine Nockenwelle auf, die in einer Längsachse angeordnet ist. Die Längsachse bildet gleichzeitig die Drehachse der Nockenwelle, gibt eine Richtung der größten Ausdehnung und der Verfahrrichtung des Linearantriebs vor und bildet eine annähernde Symmetrieachse des Linearantriebs. Darüber hinaus weist der erfindungsgemäße Linearantrieb mindestens eine mindestens einen Zahn aufweisende Zahnstange und mindestens ein Vortriebelement mit mindestens einem Vortriebzahn auf, wobei das mindestens eine Vortriebelement eine Ausnehmung aufweist, in die die Nockenwelle greifen kann. Weiterhin ist erfindungsgemäß vorgesehen, dass die Nockenwelle mittels einer Nockenwellenscheibe mit dem mindestens einen Vortriebelement in der Ausnehmung gekoppelt ist und das Vortriebelement bei einer Drehung der Nockenwelle zur Erzeugung eines Vortriebs in der Längsachse in die Zahnstange ein- und ausgedrückt werden kann.

Erfindungsgemäß ist das mindestens eine Vortriebelement über die Ausnehmung mit der Nockenwelle derart gekoppelt, dass bei einer Drehung der Nockenwelle das mindestens eine Vortriebelement zumindest einmal vollständig in die Zahnstange eingedrückt und auch heraus gedrückt wird, wodurch beim Abgleiten des Vortriebzahns des Vortriebelements an dem mindestens einen Zahn der Zahnstange ein entsprechender Vortrieb erzeugt wird. Dadurch, dass das mindestens eine Vortriebelement durch die Kopplung mit der Nockenwelle auch ausgedrückt wird, sind bevorzugt keine weiteren Mittel notwendig, um einen Formschluss beim Eindrücken des Vortriebelements wieder aufzulösen. Der mindestens eine Vortriebzahn folgt mit anderen Worten bei einer kontinuierlichen Drehung der Nockenwelle einer sich stetig wiederholenden (zyklischen) Bewegung und ist dabei kontinuierlich durch die Nockenwelle zwangsgeführt.

Eine bevorzugte Ausgestaltung der vorliegenden Erfindung sieht vor, dass die Ausnehmung das Vortriebelement durchbricht. Demnach erstreckt sich die Ausnehmung vollständig durch das Vortriebelement, wobei die Ausnehmung entweder als Durchgangsloch, bzw. als Durchbrechung ausgebildet sein kann oder als eine nach außen offene Nut. Die Ausnehmung bildet vorzugsweise zwei Seitenflächen aus, die ausgebildet sind, einen Gleitkontakt mit einer der mindestens einen Nockenwellenscheibe herzustellen. Bevorzugt sind die zwei Seitenflächen auf zwei diametralen Seiten angeordnet. Der mindestens eine Vortriebzahn kann - bevorzugt parallel und beabstandet - auf einer von den zwei Seitenflächen abgewandten Außenseite angeordnet sein.

Eine weitere bevorzugte Ausgestaltung der vorliegenden Erfindung sieht vor, dass die Nockenwelle das mindestens eine Vortriebelement in der Ausnehmung durchdringt. Mit anderen Worten ist die Nockenwelle in der Längsachse durch die Ausnehmung hindurchgesteckt, wobei bevorzugt das Vortriebelement quer zu der Längsachse ausgerichtet ist. Es ist vorteilhaft, wenn die Nockenwelle zumindest mit einer der Seitenflächen der Ausnehmung kontaktiert und eine triebliche Kopplung zwischen der Nockenwelle und dem mindestens einem Vortriebelement bildet.

Nach Maßgabe einer Weiterbildung der vorliegenden Erfindung weist die Nockenwelle mindestens zwei Nockenwellenscheiben auf, die in der Längsachse parallel und beabstandet angeordnet sind. Der jeweiligen Nockenwellenscheibe ist jeweils ein Vortriebelement zugeordnet, wobei eine Auslenkung des jeweiligen Vortriebelements von der Winkellage der jeweiligen Nockenwellenscheibe abhängt.

Gemäß einer Weiterbildung der vorliegenden Erfindung hat es sich als vorteilhaft erwiesen, wenn die mindestens zwei Nockenwellenscheiben um die Längsachse in einem Winkel α winkelversetzt angeordnet sind. Bevorzugt ist beträgt der Winkelversatz 0 < α < 360, wobei in einer Weiterbildung der Winkelversatz zwischen zwei benachbarten Nockenwellenscheiben α = 144° beträgt. Die Auslenkung des jeweiligen Vortriebelements während einer Drehung der Nockenwelle erfolgt somit phasenversetzt. Hier und im Nachfolgenden wird unter einem Phasenversatz ein Ein- und Austauchen der wenigstens zwei Vortriebelemente in die Zahnstange zu unterschiedlichen Drehwinkeln der Nockenwelle verstanden.

Eine weitere vorteilhafte Ausgestaltung der vorliegenden Erfindung sieht vor, dass die Nockenwellenscheibe um die Längsachse asymmetrisch ausgebildet ist, wobei weiterhin bevorzugt die Nockenwellenscheibe um eine Ebene in der Längsachse spiegelsymmetrisch ausgebildet ist.

Darüber hinaus hat es sich als besonders vorteilhaft erwiesen, wenn die mindestens eine Nockenwellenscheibe derart ausgestaltet ist, dass das mindestens eine Vortriebelement bei einer Drehung der Nockenwelle mit einer konstanten Winkelgeschwindigkeit um die Längsachse im Wesentlichen mit einer konstanten Geschwindigkeit in die Zahnstange eingedrückt und ausgedrückt wird. In diesem Zusammenhang wird unter einer im Wesentlichen konstanten Geschwindigkeit des mindestens einen Vortriebelements eine näherungsweise konstante Geschwindigkeit zwischen den beiden Wendepunkten verstanden, an dem das mindestens eine Vortriebelement entweder in die Zahnstange eingedrückt ist oder aus der Zahnstange ausgedrückt ist. Zwischen den beiden Wendepunkten, vorzugsweise mehr als 80 %, vorzugsweise mehr als 90 % des Hubes, sollte die Geschwindigkeit in einer Toleranz von ±10 %, weiter bevorzugt ±5 % um einen Mittelwert liegen. An den Wendepunkten wird das Vortriebelement entsprechend verzögert und anschließend wieder beschleunigt. Eine derartige Bewegung kann in einem X-Y-Diagramm als Zickzack beschrieben werden, wobei in der X-Achse der Hub aufgelöst ist und in der Y-Achse der Umlaufwinkel.

Weiterhin hat es sich als vorteilhaft erwiesen, wenn gemäß einer Weiterbildung der vorliegenden Erfindung eine Reibfläche der Nockenwellenscheibe in den der Umlaufrichtung in einem Abstand zu der Längsachse ausgebildet ist, und dass eine Änderung des Abstandes in mindestens einem ersten Abschnitt näherungsweise linear in einer Umlaufrichtung zunimmt und in mindestens einem zweiten Abschnitt in der Umlaufrichtung linear abnimmt. Die Reibfläche verläuft somit näherungsweise spiralförmig, wobei die Reibfläche derart ausgebildet ist, dass der Abstand zwischen zwei diametralen Seiten näherungsweise konstant ist, bzw. näherungsweise einer Breite der Ausnehmung des jeweiligen Vortriebelements entspricht. In dieser Ausgestaltung weist die Nockenwellenscheibe eine herzförmige Form auf, wobei sich der Flächenmittelpunkt bei einer Drehung um die Längsachse innerhalb einer Ebene, welche in der Längsachse liegt, bewegt.

Auch hat es sich als vorteilhaft erwiesen, wenn der mindestens eine erste Abschnitt und der mindestens eine zweite Abschnitt durch wenigstens einen abgerundeten Übergang verbunden sind. Insbesondere ist es bevorzugt, wenn in dem Übergang der Abstand zwischen den zwei diametralen Seiten der Reibfläche geringfügig kleiner ist als die Breite der Ausnehmung, wodurch ein Verklemmen oder Verkannten der Nockenwellenscheibe in der Ausnehmung verhindert wird. Insbesondere ist es bevorzugt, wenn die Übergänge als ein Übergangsradius ausgebildet sind, wobei der Übergangsradius in etwa der Breite der Ausnehmung entspricht, bevorzugt mit einer Toleranz von ±10 %.

In einer Weiterbildung der vorliegenden Erfindung können sich der erste Abschnitt und/oder der zweite Abschnitt über einen Halbkreis erstrecken. Durch eine derartige Ausgestaltung der Nockenwellenscheibe wird das Vortriebelement bei einer vollständigen Umdrehung der Nockenwelle um die Längsachse einmal vollständig in die Zahnstange eingedrückt und wieder herausgedrückt, folglich entspricht diese Bewegung einem Zyklus.

Gemäß einer weiteren bevorzugten Ausgestaltung der vorliegenden Erfindung ist eine Breite der Ausnehmung derart gewählt, dass die Nockenwellenscheibe näherungsweise spielfrei umgriffen ist. Die Ausnehmung des mindestens einen Kontaktelements kann dabei mit entsprechenden Mitteln ausgekleidet sein, durch die die Nockenwellenscheibe reibungsreduziert die Ausnehmung kontaktieren kann bzw. an den Seitenflächen abgleiten kann. Beispielsweise kann die Reibung zwischen der Nockenwellenscheibe bzw. der Reibfläche der Nockenwellenscheibe und den Seitenflächen der Ausnehmung durch die Wahl entsprechender Materialpaarungen reduziert werden, wobei auch Schmiermittel eingesetzt werden können, um die Reibung zu reduzieren.

Weiterhin hat es sich als vorteilhaft erwiesen, wenn eine Höhe der Ausnehmung mindestens der Breite der Ausnehmung entspricht. Insbesondere ist es bevorzugt, wenn die Höhe größer ist als die Breite der Ausnehmung, wodurch die mindestens eine die Seitenflächen verbindende Querfläche nicht mit der Nockenwellenscheibe in Berührung kommt.

Nach Maßgabe einer Weiterbildung der vorliegenden Erfindung können die wenigstens zwei Zahnstangen zueinander um einen Versatz angeordnet sein. Der Versatz beschreibt dabei einen Abstand, gemessen parallel zu der Längsachse, zwischen den Zahnspitzen der mindestens zwei Zähne der Zahnstangen. Für den Fall, dass der Versatz ΔA = 0 beträgt, sind die mindestens zwei Zahnstangen spiegelsymmetrisch oder liniensymmetrisch zu der Längsachse angeordnet, währenddessen bei einem Versatz größer null, also ΔA > 0, die mindestens zwei Zahnstangen in Bezug auf die Längsachse asymmetrisch angeordnet sind. In einer bevorzugten Ausgestaltung kann der Versatz einen halben Abstand, ein Viertel oder ein Drittel des Abstandes zwischen zwei Zähnen der jeweiligen Zahnstange betragen, wobei bevorzugt der Abstand zwischen zwei Zähnen der mindestens zwei Zahnstangen gleich groß gewählt sein sollte.

Eine weitere vorteilhafte Ausgestaltung der vorliegenden Erfindung sieht vor, dass mindestens zwei Vortriebzähne vorgesehen sind. Die mindestens zwei Vortriebzähne sind dabei derart angeordnet, dass diese bei einer Drehung der Nockenwelle phasenversetzt ein- und ausgedrückt werden. Gemäß einer bevorzugten Ausgestaltung können die mindestens zwei Vortriebzähne auf gegenüberliegenden Seiten des jeweiligen Vortriebelements bzw. auf gegenüberliegenden Seiten der Ausnehmung des jeweiligen Vortriebelements und/oder in einer gemeinsamen Reihe angeordnet sein, wobei bevorzugt die mindestens zwei Vortriebzähne fluchtend, also in einer gemeinsamen Ebene quer zur Längsachse, auf zwei Außenseiten des Vortriebelements angeordnet sein können. Auch können die mindestens zwei Vortriebzähne auf einer gemeinsamen Seite des Vortriebelements versetzt angeordnet sein oder auf gegenüberliegenden Seiten versetzt angeordnet sein. Die mindestens zwei Vortriebzähne des mindestens einen Vortriebelements werden phasenversetzt in jeweils eine Zahnstange eingedrückt und ausgedrückt, wobei der Phasenversatz bevorzugt 180° bzw. in Radien Π beträgt.

Gemäß einer vorteilhaften Ausgestaltung der vorliegenden Erfindung sind die wenigstens zwei Vortriebzähne in einer gemeinsamen Reihe in einem ersten Abstand in der Längsachse angeordnet und die Zähne der Zahnstange in einer gemeinsamen Reihe in einem zweiten Abstand entlang der Längsachse angeordnet, wobei der erste Abstand kleiner als der zweite Abstand ist oder der zweite Abstand kleiner als der erste Abstand ist. Mit anderen Worten, die ersten Abstände zwischen den Vortriebzähnen und die zweiten Abstände zwischen den Zähnen der mindestens einen Zahnstange sollten ungleich sein.

Der erste Abstand und der zweite Abstand sind jeweils auf die geometrische Mitte des jeweiligen Vortriebzahns bzw. des Zahns der Zahnstange bezogen und werden parallel zu der Längsachse gemessen. Durch die unterschiedliche Bemessung des ersten Abstandes und des zweiten Abstandes wird erreicht, dass während einer zyklischen Bewegung der wenigstens zwei Vortriebzähne mit einem Phasenversatz die jeweiligen Vortriebzähne in unterschiedlichen Relativpositionen zu den Zähnen der Zahnstange positioniert sind.

Nach Maßgabe einer weiteren bevorzugten Ausgestaltung der vorliegenden Erfindung weist der mindestens eine Vortriebzahn des Vortriebelements eine größere, eine gleiche oder eine kleinere Zahnhöhe und/oder eine größere Zahnhöhe als der mindestens eine Zahn der Zahnstange auf. Durch eine Vergrößerung der Zahnhöhe und der Zahnlänge der Zähne der Zahnstange wird die Auflagefläche der Vortriebzähne auf den Zahnflanken bzw. die Reibfläche auf den Zahnflanken erhöht, wodurch eine gleichmä-ßigere Kraftübertragung zwischen der Zahnstange und den Vortriebzähnen bewerkstelligt werden kann. Ebenfalls ist es möglich, dass die Zahnhöhe und die Zahnlänge der Vortriebzähne größer ist als die Zahnhöhe und die Zahnlänge der Zähne der Zahnstange, wodurch eine höhere Überdeckung erzeugt werden kann und höhere maximale Belastungen erreicht werden können und so die Laufruhe des Linearantriebs verbessert werden kann. Demzufolge kann durch die Wahl der Größenverhältnisse zwischen den Vortriebzähnen und den Zähnen der Zahnstange maximale Belastungen und unterschiedliche Laufeigenschaften eingestellt werden. Für den Fall, dass die Zahnlänge und die Zahnhöhe der Vortriebzähne kleiner ist als die Zahnlänge und die Zahnhöhe der Zähne der Zahnstange können in einen Zahnzwischenraum zwischen zwei Zähnen der Zahnstange auch mehr als ein Vortriebzahn gleichzeitig ein- bzw. austauchen.

Weiterhin hat es sich als vorteilhaft erwiesen, wenn die wenigstens zwei Vortriebzähne und die Zähne der Zahnstange eine korrespondierende Zahnform aufweisen. Unter einer korrespondierenden Zahnform ist zu verstehen, dass der jeweilige Vortriebzahn beim vollständigen Eintauchen in den Zahnzwischenraum zwischen zwei Zähne der Zahnstange mit seiner den Zähnen der Zahnstange zugewandten Reibfläche flächig an zumindest einer der Reibflächen der Zähne der Zahnstange anliegen kann. Insbesondere hat es sich als vorteilhaft erwiesen, wenn sowohl der jeweilige Vortriebzahn als auch der mindestens eine Zahn der Zahnstange gleiche Zahnflankenwinkel aufweist. In diesem Zusammenhang wird angemerkt, dass die Reibfläche der jeweiligen Zahnflanken nicht zwangsweise einer Ebene entsprechen muss, sondern ebenfalls als eine - bevorzugt nach außen - gewölbte Fläche ausgebildet sein kann.

Eine weitere bevorzugte Ausgestaltung der vorliegenden Erfindung sieht vor, dass der mindestens eine Vortriebzahn ballig oder pfeilförmig ausgebildet ist. Der ballige- oder pfeilförmige Vortriebzahn weist einen Zahnspitze auf, die im Gegensatz zu herkömmlichen Vortriebzähnen nicht entlang einer geraden Linie ausgebildet, sondern entlang einer V- oder C-förmigen Linie, bevorzugt einer symmetrischen - oder C-förmigen Linie. Durch die ballige- oder pfeilförmige Ausgestaltung des mindestens einen Vortriebzahns wird dieser nicht über seine gesamte Breite gleichzeitig in den Zahnzwischenraum der Zahnstange eingedrückt. Vielmehr wird ausgehend von der Spitze der Vortriebzahn mit der Zahnstange in Wirkkontakt gebracht wird, wodurch im Vergleich zu einer geraden Zahnflanke eine Geräuschreduktion erreicht werden kann.

Eine Weiterbildung des Linearantriebs sieht vor, dass ein Antrieb vorgesehen ist. Bevorzugt ist der Antrieb ein elektrischer Motor, durch den die Nockenwelle angetrieben werden kann.

Weiterhin ist es vorteilhaft, wenn zwischen dem Antrieb und der Nockenwelle ein Getriebe angeordnet ist, wobei besonders bevorzugt zwischen dem Antrieb und der Nockenwelle ein Planetengetriebe angeordnet sein kann.

Der Antrieb, das Getriebe und/oder die Nockenwelle können bzw. kann gemäß einer Ausgestaltung des Linearantriebs in dem Schlitten angeordnet sein. Die Versorgung des Antriebs in dem Schlitten mit Energie und/oder mit Steuersignalen kann über eine Schleppkette mit entsprechenden elektrischen Leitungen erfolgen.

Weiterhin hat es sich als vorteilhaft erwiesen, wenn der Schlitten das mindestens eine Vortriebelement in einer Ebene, welche auf der Längsachse liegt, beweglich abgestützt hält. Insbesondere ist es bevorzugt, wenn der Schlitten entsprechende Mittel aufweist, durch die das mindestens eine Vortriebelement reibungsvermindernd gelagert gehalten ist.

Ein weiterer Aspekt der vorliegenden Erfindung bezieht sich auf eine Längsverstelleinheit mit einem zuvor beschriebenen Linearantrieb.

Ein weiterer und letzter Aspekt der vorliegenden Erfindung betrifft ein Kraftfahrzeug mit wenigstens einer Längsverstelleinheit mit mindestens einem erfindungsgemäßen Linearantrieb.

Nachfolgend wird unter Bezugnahme auf die begleitenden Zeichnungen ein erfindungsgemäßes Ausführungsbeispiel sowie Weiterbildungen der vorliegenden Erfindung im Detail beschrieben. Es zeigen:

Figur 1    eine perspektivische Darstellung eines erfindungsgemäßen Linearantriebs, aufweisend einen in einem Zahnstangengehäuse angeordneten Schlitten mit mindestens einem Vortriebselement, welches trieblich über eine Nockenwellenscheibe mit einer Nockenwelle gekoppelt ist und bei einer Umdrehung der Nockenwelle in einer zyklischen Hubbewegung zum Erzeugen eines Vortriebs in wenigstens eine Zahnstange des Zahnstangengehäuses eingedrückt und ausgedrückt wird,

Figur 2    eine Draufsicht auf den erfindungsgemäßen Linearantrieb gemäß Figur 1,

Figur 3    eine perspektivische und detaillierte Darstellung der Nockenwelle gemäß Figur 1,

Figur 4a    eine vereinfachte Seitenansicht der Nockenwelle mit zehn Vortriebselementen,

Figur 4b    eine Schnittdarstellung in der Schnittlinie A-A gemäß Figur 4a,

Figur 4c    eine Schnittdarstellung in der Schnittlinie B-B gemäß Figur 4a,

Figur 5    ein schematisches X-Y-Diagramm in dem ein Hub des Vortriebselement über eine Umdrehung der Nockenwelle aufgetragen ist,

Figur 6    eine vereinfachte Darstellung einer Kontur einer Nockenwellenscheibe, und

Figur 7a-7c    schematische Darstellungen unterschiedlicher Größenverhältnisse der Zähne der Zahnstange und der Vortriebzähne.

Nachfolgend werden gleiche oder funktional gleiche Bauteile mit gleichen Bezugszeichen gekennzeichnet. Der Übersichtlichkeit halber sind in den einzelnen Figuren nicht alle gleichen oder funktional gleichen Teile mit einer Bezugsziffer versehen.

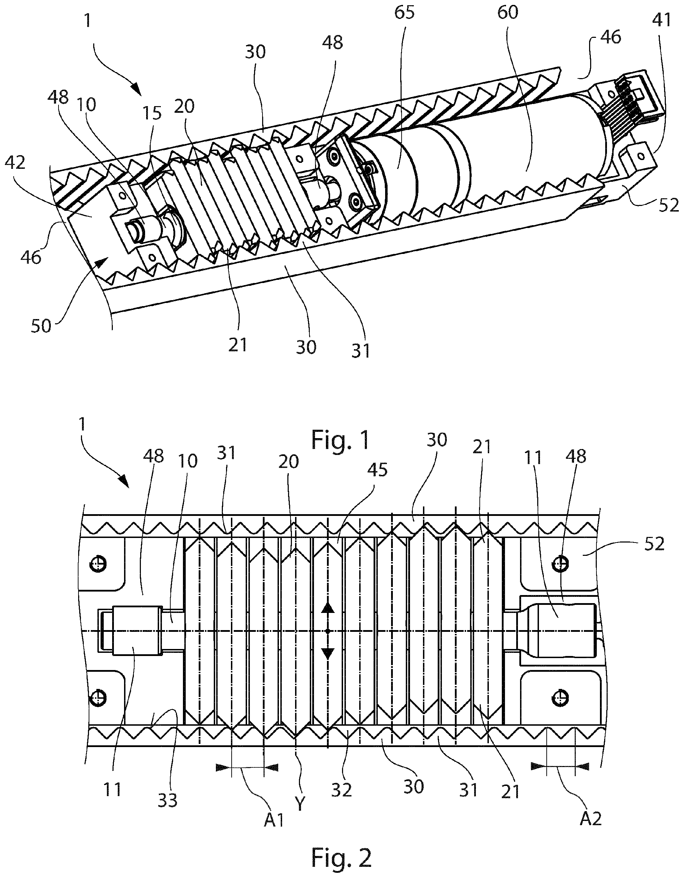

Figur 1 zeigt einen erfindungsgemäßen Linearantrieb 1 aufweisend ein Zahnstangengehäuse 40 und einen Schlitten 50, der entlang einer Längsachse X zwischen zwei in einer Querachse Y gegenüberliegenden Zahnstangen 30 beweglich gelagert gehalten ist. Der Linearantrieb 1 kann in einer (nicht dargestellten) Längsverstelleinheit zum Verstellen eines (nicht dargestellten) Sitzes in einem (nicht dargestellten) Kraftfahrzeug verwendet werden.

Das Zahnstangengehäuse 40 kann wie im dargestellten Ausführungsbeispiel quaderförmig ausgebildet sein und einen Raum 46 - zumindest teilweise - umschließen. Auf zwei dem Raum 46 zugewandten gegenüberliegenden Seiten ist jeweils eine der Zahnstangen 30 angeordnet, die jeweils aus einer Vielzahl von Zähnen 31 gebildet ist, die bevorzugt äquidistant entlang der Längsachse X angeordnet sind. Zwischen jeweils zwei Zähnen 31 wird ein entsprechender Zahnzwischenraum 32 ausgebildet.

Das Zahnstangengehäuse 40 kann derart ausgestaltet sein, dass es in der Längsachse X in einem ersten Endbereich und in einem zweiten Endbereich einen Anschlag bildet, durch den der maximale Verfahrweg des Schlittens 50 innerhalb des Raums 46 vorgegeben wird.

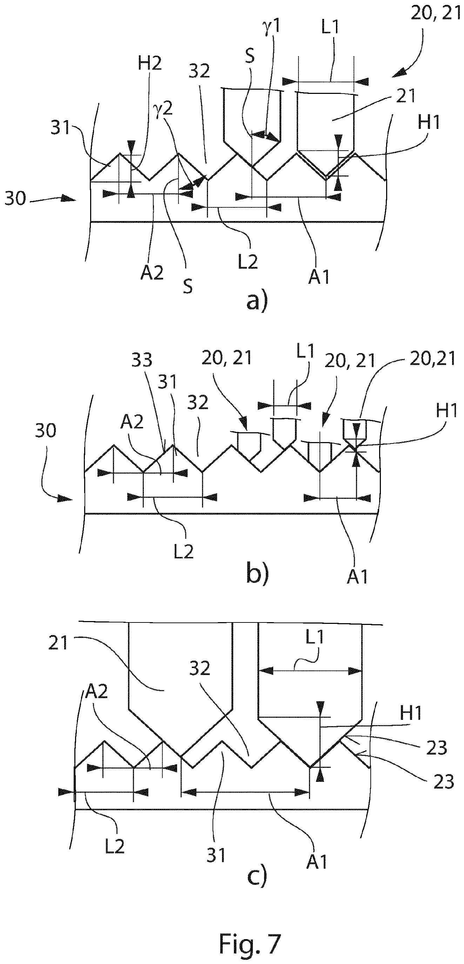

In dem dargestellten Ausführungsbeispiel - insbesondere wie in den Figuren 7a-7c detailliert gezeigt ist - sind die Zähne 31 der zwei Zahnstangen 30 identisch ausgebildet, jedoch können die Zähne 31 der Zahnstangen 30 sowohl unterschiedliche Zahnhöhen H2, Zahnbreiten L2 und/oder Zahnflankenwinkel $\gamma2$ aufweisen, wobei bevorzugt die beiden Flanken eines jeden Zahns 31 einer Zahnstange den gleichen Zahnflankenwinkel $\gamma2$ aufweisen.

Die Anordnung der Zähne 31 der Zahnstangen 30 auf den zwei gegenüberliegenden Seiten der Längsachse X ist symmetrisch, das heißt, die jeweiligen Zähne 31 sind spiegelsymmetrisch zu der Längsachse X angeordnet. Allerdings können die Zähne 31 der beiden Zahnstangen 30 auch asymmetrisch um die Längsachse X angeordnet sein, wobei die Zähne 31 der beiden Zahnstangen 30 einen Versatz $\Delta A$ aufweisen können. Beispielsweise kann der Versatz $\Delta A$ gemäß einer nicht gezeigten Weiterbildung ca. ½ A2 betragen, also $\Delta A \approx$ ½ A2. Der Versatz $\Delta A$ kann beliebig groß gewählt werden.

Die Zähne 31 sind in einem Abstand A2 angeordnet, wobei der jeweilige Abstand A2, jeweils bezogen auf die geometrische Mitte bzw. eine Zahnspitze des jeweiligen Zahns 31 gemessen wird. Bei symmetrischen Zähnen 31 ist typischerweise eine Zahnspitze in der geometrischen Mitte ausgebildet, von der sich zwei symmetrische Zahnflanken als Reibflächen 33 erstrecken. In dem dargestellten Ausführungsbeispiel schließen die beiden Flanken einen Winkel von ca. 135° ein, wobei die Flankenwinkel $30 \leq \gamma2 < 180$ sein sollten.

Der Schlitten 50 kann aus einem mehrteiligen Gehäuse gebildet sein und ein erstes Gehäuseteil 53 und ein (nicht dargestelltes) zweites Gehäuseteil 54 aufweisen. Das Gehäuse weist einen ersten Endbereich 41 und einen zweiten Endbereich 42 auf, die als Endanschlag mit dem Zahnstangengehäuse 40 zusammenwirken können.

Figur 2 zeigt, dass in dem Gehäuse des Schlittens 50 eine Nockenwelle 10 koaxial zu der Längsachse X angeordnet ist, die an Lagerabschnitten 11 mittels Lager 48 in der Längsachse X drehbar gelagert gehalten ist. Die Nockenwelle 10 kann über einen Verbindungsabschnitt 12 und mittels eines Getriebes 65 mit einem Antrieb 60 gekoppelt sein, wodurch die Nockenwelle 10 durch den Antrieb 60 in eine Drehbewegung um die Längsachse X versetzt werden kann. Die Längsachse X ist somit ebenfalls die Drehachse der Nockenwelle 10. Der Verbindungsabschnitt 12 dient einer Kraftkopplung mit dem Antrieb 60 und kann hierzu zur Bildung einer formschlüssigen Steckverbindung konfiguriert sein.

Der Antrieb 60 kann bevorzugt ein elektrischer Antrieb sein und kann weiterhin bevorzugt mit dem als Planetengetriebe ausgebildeten Getriebe 65 mit der Nockenwelle 10 gekoppelt sein. Das Getriebe 65 kann eine Drehzahl des Antriebs 60 in eine Drehzahl der Nockenwelle über- oder untersetzen.

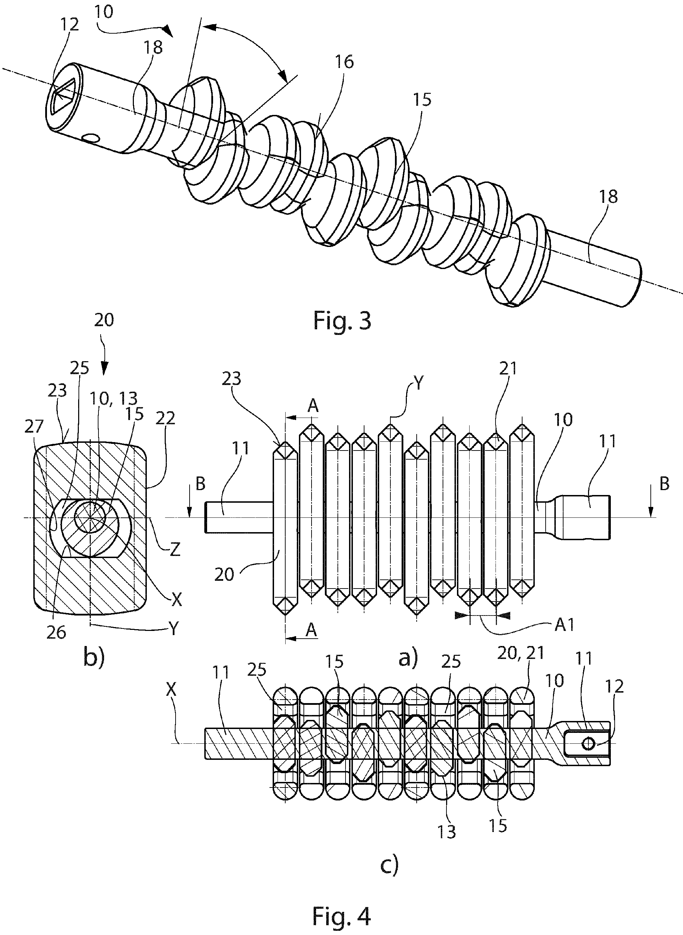

Die Nockenwelle 10 - gemäß Figur 3 - weist eine Mehrzahl von Nockenwellenscheiben 15 auf, die zwischen den beiden Lagern 48 zueinander beabstandet angeordnet sind. Die Nockenwellenscheiben 15 sind jeweils in einer Ebene orthogonal zu der Längsachse X angeordnet und können - wie im Nachfolgenden noch detailliert beschrieben werden wird - eine spezielle asymmetrische Form bzw. Ausgestaltung aufweisen.

Die Nockenwellenscheiben 15 sind, wie insbesondere der Figur 3 zu entnehmen ist, entlang der Längsachse X jeweils zueinander in einem Winkel $\alpha$ verdreht angeordnet, wobei im vorliegenden Ausführungsbeispiel die als Herz ausgebildeten Nockenwellenscheiben 15 um die Längsachse X um jeweils den Winkel $\alpha = 22{,}5°$ verdreht angeordnet sind. Der Winkel $\alpha$ wird in einer Ebene senkrecht zur Längsachse X gemessen.

Die Nockenwelle 10 kann aus einer Vielzahl aus Nockenwellenscheiben 15 und einer Antriebswelle 13 gebildet werden, wobei die Nockenwellenscheiben 15 jeweils eine Öffnung 14 aufweisen können, die die Antriebswelle 13 aufnimmt. Die jeweilige Nockenwellenscheibe 15 kann auf eine beliebige Weise mit der Antriebswelle 13 drehstarr verbunden sein, beispielsweise durch eine Pressverbindung.

Weiter in Bezug auf Figur 2 ist ersichtlich, dass in dem Gehäuse jeweils mehrere Führungsausnehmungen 45 angeordnet sind, welche quer zur Längsachse X jeweils mittig und auf gegenüberliegenden Seiten zu den Nockenwellenscheiben 15 angeordnet sind.

In die jeweilige Führungsausnehmung 45 ist ein Vortriebelement 20 eingesetzt, das in der Führungsausnehmung 45 beweglich ist und - wie mit dem Doppelpfeil gekennzeichnet - eine Hubbewegung vornehmen kann, welche radial oder sekantial zu der Längsachse X bzw. parallel zu der Querachse Y verläuft.

Unter Bezugnahme auf die Figuren 4b und 4c ist zu entnehmen, dass das jeweilige Vortriebelement 20 eine Ausnehmung 25 aufweist, die jeweils eine Nockenwellenscheibe 15 aufnehmen kann. Die Ausnehmung 25 durchbricht das Vortriebelement 20 vollständig nach Art einer Durchgangsöffnung oder Durchbrechung. Die Ausnehmung 25 ist vorzugsweise in einer Ebene quer zur Längsachse X um den Flächenmittelpunkt ausgebildet und weist in der Querachse Y eine maximale Breite B und in einer Hochachse Z eine Höhe H auf. In der Querachse Y wird die Ausnehmung 25 von zwei Seitenflächen 26 umrahmt und in der Hochachse Z von zwei Querflächen 27. Die Höhe H ist vorzugsweise mindestens genauso groß wie die Breite B, wobei weiter bevorzugt die Höhe H größer ist als die Breite B, also $H \geq B$.

In der Querachse Y ist auf der von der Ausnehmung 25 abgewandten Seite jeweils ein Vortriebzahn 21 angeordnet, wobei der jeweilige Vortriebzahn 21 eine Höhe H1, eine Breite L1 und einen Zahnflankenwinkel $\gamma1$ aufweist.

Die triebliche Kopplung zwischen der Nockenwelle 10 und dem Vortriebelement 20 erfolgt in der Ausnehmung 25 durch einen Wirkkontakt zwischen einer Reibfläche 13 der Nockenwellenscheibe 15 und den Seitenflächen 26 der Ausnehmung 25, was insbesondere in den Schnittdarstellungen gemäß Figuren 4b und 4c gezeigt ist. Durch die Kopplung zwischen der Nockenwelle 10 und dem jeweiligen Vortriebelement 20 kann das Vortriebelement 20 in die Zahnstange 30 eingedrückt und wieder ausgedrückt werden, ohne dass hierfür gesonderte Rückstellmittel vorgesehen werden müssen. Zum Eindrücken erfolgt ein Krafteintrag der Nockenwellenscheibe 15 auf einer der Seitenflächen 26 und zum Ausdrücken erfolgt ein Krafteintrag der Nockenwellenscheibe 15 auf der gegenüberliegenden Seitenfläche 26.

Symmetrisch zu der Längsachse X ist um die Nockenwelle 10 eine Reihe mit jeweils zehn Vortriebselementen 20 mit jeweils zwei Vortriebszähnen 21 auf gegenüberliegenden Seiten angeordnet. Die Vortriebzähnen 21 benachbarter Vortriebselemente 20 - gemessen in der Längsachse X - in einem Abstand A1 angeordnet. Die Reihe ist parallel zu der Längsachse X ausgerichtet. Die Führungsausnehmung 45 bildet für den jeweiligen Vortriebzahn 21 ein Lager, wodurch das Vortriebelement 20 leichtgängig quer zur Längsachse X hubbeweglich gelagert ist und durch die Führungsausnehmung 45 hindurch in einen der Zahnzwischenräume 32 der Zahnstange 30 eingedrückt und ausgedrückt werden kann.

Im ausgedrückten Zustand kann der jeweilige Vortriebzahn 21 entlang der Längsachse X über eine Zahnspitze eines der Zähne 31 der Zahnstange 30 geführt werden.

Der jeweilige Vortriebzahn 21 kann bevorzugt an die Form der Zähne 31 der Zahnstange 30 angepasst sein, wodurch die Zahnflanken des Vortriebzahns 21 im vollständig in den Zahnzwischenraum 32 eingetauchten Zustand des Vortriebzahns 21 flächig an den Flanken der Zähne 31 anliegen. Die Breite L1 des jeweiligen Vortriebzahns 21 kann dem Abstand A2 zwischen zwei Zähnen 31 entsprechen. Es kann vorteilhaft sein, wenn ein Abstand A1 zwischen zwei Vortriebzähnen 20 größer oder kleiner als der Abstand A2 zwischen zwei Zähnen 31 ist. Somit kann gemäß einer bevorzugten Ausgestaltung A2 < A1 oder A1 > A2 sein. Mit anderen Worten sollten die Abstände A1, A2 ungleich sein, also A1 ≠ A2. Allerdings kann auch A1 = A2 sein, wenn der Versatz $\Delta$A ≠ 0 und $\Delta A \neq \mathbb{Z}$, also der Versatz $\Delta$A keine ganze Zahl ist.

Das jeweilige Vortriebelement 20 umfasst weiterhin einen Fuß 22. Der Fuß 22 kann einen konstanten Querschnitt und entsprechende Flächen aufweisen, an denen er reibungsminimiert an der Führungsausnehmung 45 bei der zyklischen Hubbewegung lineargeführt entlanggleiten kann.

Die Nockenwelle 10 und die Vortriebselemente 20 sind derart trieblich innerhalb der Ausnehmung 25 miteinander gekoppelt, dass das jeweilige Vortriebselement 20 bei einer Umdrehung der Nockenwelle 10 mindestens eine zyklische Hubbewegung vornimmt.

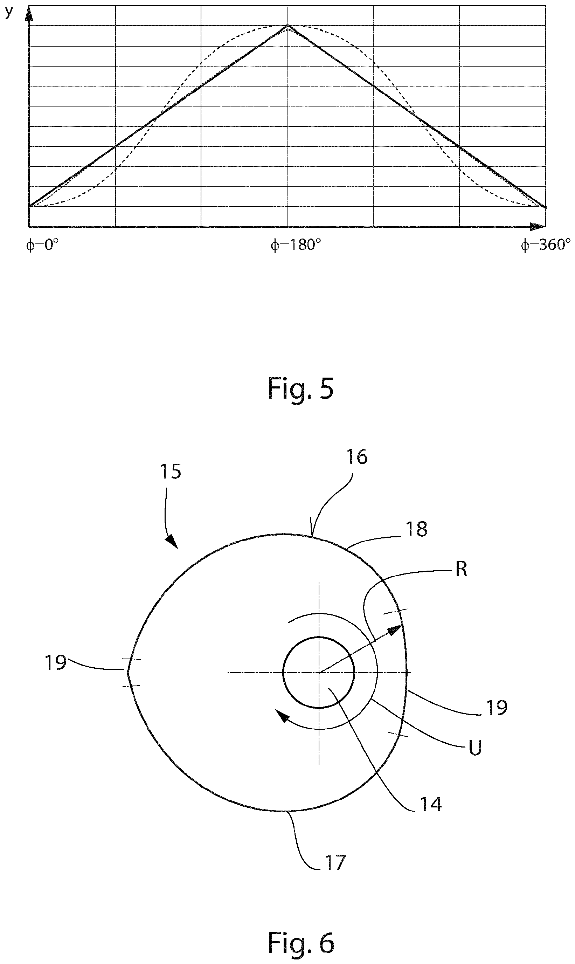

In Figur 5 ist in einem X-Y-Diagramm der Hub eines Vortriebelements 20 über eine vollständige Umdrehung ($\phi$=360°) der Nockenwelle 10 dargestellt. Die zyklische Hubbewegung kann gemäß Figur 5 beispielsweise als eine vollständige Periode einer Zickzacklinie bzw. -kurve beschrieben werden, wobei der jeweilige Vortriebzahn 21 des Vortriebelements 20 innerhalb einer zyklischen Hubbewegung einmal in die Zahnstange 30 bzw. einen Zahnzwischenraum 32 eintaucht, einmal vollständig austaucht und in die Ausgangslage zurückkehrt. Zum Vergleich ist in Figur 5 eine Periode einer Sinuskurve durch eine gestrichelte Linie gezeigt. Die gepunktete Linie soll den realen (theoretischen) Hub des Vortriebelements 20 zeigen.

Durch die um die Längsachse X im Winkel $\alpha$ zueinander verdrehten Nockenwellenscheiben 15 erfolgt die zyklische Hubbewegung der jeweiligen Vortriebelemente 20 phasenversetzt, wodurch die Vortriebelemente 20 zu unterschiedlichen Drehwinkeln der Nockenwelle 10 in die jeweilige Zahnstange 30 bzw. Zahnzwischenräume 32 ein- und ausgedrückt werden bzw. ein- und austauchen. Ebenfalls werden die auf der gegenüberliegenden Seite der Vortriebselemente 20 angeordneten Vortriebzähne 21 zu unterschiedlichen Drehwinkeln der Nockenwelle 10 in die jeweilige Zahnstange 30 bzw. Zahnzwischenräume 32 ein- und ausgedrückt, wobei zwischen den Vortriebzähnen 21 eines Vortriebselements 20 ein Phasenversatz von 180° vorliegt. Mit anderen Worten greifen die Vortriebzähne 21 unterschiedlicher Vortriebelemente 20 bei einer konstanten Drehzahl der Nockenwelle 10 zu unterschiedlichen Zeitpunkten in einen Zahnzwischenraum 32 ein.

Die jeweilige Nockenwellenscheibe 15 weist eine Reibfläche 13 auf, welche die der Ausnehmung 25 des Vortriebelements 20 zugewandte Außenseite bildet. Die Reibfläche 13 und die Seitenflächen 26 der Ausnehmung 25 gleiten aneinander ab, wobei durch die Reibfläche 13 eine radial oder sekantial wirkende Kraft auf das jeweilige Vortriebelement 20 aufgebracht wird, durch die das Vortriebelement 20 in Richtung der Zahnstange 30 gedrückt wird und anschließend in die entgegengesetzte Richtung wieder ausgedrückt wird.

Die Funktionsweise des Linearantriebs 1 beruht auf der Tatsache, dass das jeweilige Vortriebelement 20 beim Eintauchen in einen Zahnzwischenraum 32 der Zahnstange 30 in Reibkontakt mit einer Flanke eines der Zähne 31 der Zahnstange 30 kommt. Beim Eintauchen des jeweiligen Vortriebzahns 21 kommt aufgrund einer bevorzugten balligen Ausgestaltung des Vortriebzahns 21 zunächst ein Kuppe 28 einer ersten Flanke bzw. eine der Reibflächen 23 in Kontakt mit der Flanke bzw. der Reibfläche 33 eines der Zähne 31. Die beiden Reibflächen 23, 33 erzeugen aufgrund der keilförmigen Ausgestaltung einen in der Längsachse X gerichteten Vortrieb, durch den der Schlitten 50 entlang der Längsachse X in dem Raum verschoben wird. Sobald einer der Vortriebzähne 21 des Vortriebelements 20 vollständig in die Zahnstange 30 eingetaucht ist, folgt phasenversetzt ein weiterer Vortriebzahn 21, der versetzt zu der Mitte eines weiteren Zahnzwischenraums 32 angeordnet ist. Der weitere Vortriebzahn 21 eines weiteren Vortriebelements 20 taucht in einen weiteren Zahnzwischenraum 32 unter Erzeugung eines Vortriebs ein. Derweilen wird der zuerst vollständig in den Zahnzwischenraum 32 eingetauchte Vortriebzahn 21 durch die kontaktierenden Reibflächen 23, 33 aus dem Zahnzwischenraum 32 ausgedrückt und der auf der gegenüberliegenden Seite des jeweiligen Vortriebelements 20 angeordnete Vortriebzahn 21 wird zeitgleich in einen gegenüberliegenden Zahnzwischenraum 32 der gegenüberliegenden Zahnstange 30 eingedrückt. Weitere Vortriebzähne 21 können versetzt oder zeitgleich folgen, wodurch ein weiterer Vortrieb erzeugt werden kann.

Durch die ballige Ausgestaltung des Vortriebzahns 21 kann eine Geräuschreduktion bewerkstelligt werden und die Laufruhe des Linearantriebs 1 verbessert werden

Wie den vergrößerten Darstellungen gemäß den Figuren 4b und 6 zu entnehmen ist, weist die Nockenwellenscheibe 15 eine spezielle Formgebung auf, durch die eine möglichst lineare bzw. konstante Bewegung des jeweiligen Vortriebselementes 20 erzeugt werden kann. Konkreter ist die Nockenwellenscheibe 15 in dem dargestellten Ausführungsbeispiel herzförmig ausgebildet und weist einen ersten Abschnitt 17 und einen zweiten Abschnitt 18 auf, die sich jeweils über einen Halbkreis erstrecken. Der erste Abschnitt 17 und der zweite Abschnitt 18 sind spiegelsymmetrisch ausgebildet und weisen näherungsweise den Verlauf einer Spirale auf. Der spiralförmige Verlauf des jeweiligen Abschnitts 17, 18 ist dabei derart gewählt, dass sich in einer Umlaufrichtung mit zunehmenden Umlaufwinkel $\phi$ die Änderung des Radius R, also der Abstand zwischen der Längsachse X und der Reibfläche 13 näherungsweise konstant ändert, also $\Delta\phi \approx |\Delta R|$. Im ersten Abschnitt 17 steigt somit der Radius R, wie in Figur 5 anhand der idealisierten durchgängigen Line gezeigt ist, linear an. In diesem Abschnitt 17 gilt näherungsweise $\Delta\phi \approx \Delta R$. Im zweiten Abschnitt 18 fällt der Radius R, wie in Figur 5 anhand der idealisierten durchgängigen Line gezeigt ist, linear ab. In diesem Abschnitt 18 gilt näherungsweise $\Delta\phi \approx -\Delta R$. Weiterhin ist der Radius der beiden Abschnitte 17, 18 derart gewählt, dass der Abstand zwischen zwei diametralen Seiten der Reibfläche 16 näherungsweise der Breite B der Ausnehmung 25 entspricht. Daraus ergibt sich, dass bei einer Drehung der Nockenwellenscheibe 15 ein Flächenmittelpunkt der Nockenwellenscheibe in der Querrichtung exakt auf der Querachse Y wandert.

Zwischen dem ersten Abschnitt 17 und dem zweiten Abschnitt 18 ist jeweils ein Übergang 19 ausgebildet, der die spiralförmigen Verläufe verbindet. Die Abschnitte 17, 18 sowie die Übergänge 19 sind durch Strich-Punktlinien symbolisch getrennt.

Der Übergang 19 ist nach Art eines Übergangsradius ausgebildet, und kann in einer bevorzugten und dargestellten Ausführung ca. der Breite B der Ausnehmung 25 entsprechen. Um ein Verkeilen oder Verklemmen der Nockenwellenscheibe 15 in der Ausnehmung 25 zu vermeiden, können die Übergänge 19 derart gewählt sein, dass der Abstand zwischen den zwei gegenüberliegenden diametral ausgebildeten Übergängen 19 minimal 90 %, bevorzugt mehr als 95 % der Breite B der Ausnehmung 25 beträgt.

Das jeweilige Vortriebelement 20 erfährt bei einer Umdrehung ($\phi = 360°$) einen vollständigen Zyklus bzw. Periode. Mit anderen Worten beschrieben, wird das jeweilige Vortriebelement 20 bei einer Umdrehung ($\phi = 360°$) der Nockenwelle 10 einmal in die Zahnstange 30 eingedrückt und ausgedrückt. Durch den Winkelversatz zwischen zwei in der Längsachse X beabstandeten Nockenwellenscheiben 15 beträgt der Phasenversatz $\Delta\phi$ bezogen auf eine Umdrehung ($\phi = 360°$) der Längsachse X $1/16\phi$. Anders gesagt, muss die Nockenwelle 10 um 22,5° verdreht werden, damit nach dem Eindrücken eines ersten Vortriebelements 20 ein zweites Vortriebelement 20 in einen weiteren Zahnzwischenraum 32 der gleichen Zahnstange 30 eintaucht. Der jeweilige zweite, auf der gegenüberliegenden Seite angeordnete Vortriebzahn 21 wird mit einem Phasenversatz $\Delta\phi$ von 180° in die auf der gegenüberliegenden Seite angeordnete Zahnstange 30 eingedrückt und ausgedrückt.

Sowohl die Zähne 31 der Zahnstange 30, als auch die Vortriebzähne 21 (nicht dargestellt) können unterschiedliche Zahngeometrien aufweisen. Beispielhaft können die Zähne 31 sinusförmig oder zickzack-förmig mit zwei um eine Symmetrielinie S symmetrischen Flanken ausgebildet sein. Auch können entweder die Zähne 31 oder die Vortriebzähne 21 rechteckig sein, wobei zumindest die Zähne 31 der Zahnstange 30 oder die Vortriebzähne 21 zum Erzeugen eines Vortriebs eine Reibfläche 23, 33 mit einem Zahnflankenwinkel $\gamma 1$, $\gamma 2$ aufweisen, die zum Erzeugen eines Vortriebs keilförmig ausgebildet ist.

Sobald ein Vortriebzahn 21 in einen Zahnzwischenraum 32 eintaucht, wird ein Formschluss zwischen der Zahnstange 30 und dem Schlitten 50 bewerkstelligt, wodurch der Schlitten 50 näherungsweise spielfrei in der Längsachse X festgestellt ist. Die Vortriebzähne 21 der Vortriebselemente verkeilen demnach den Schlitten 50 in der Längsachse X und die mit der Zahnstange 30 in Eingriff stehenden Vortriebzähne 21 geben die Bruchlast vor, welche durch die Anzahl der Vortriebzähne 21 in einer Reihe als auch durch die Anzahl der Reihen beliebig ausgelegt werden kann.

Die Figuren 6a bis 6c zeigen unterschiedliche Größenverhältnisse der Vortriebzähne 21 und der Zähne 31 der Zahnstange 30. Der jeweilige Vortriebzahn 21 weist eine Zahnlänge L1, eine Zahnhöhe H1 und einen Zahnflankenwinkel $\gamma 1$ auf. Ebenso weisen die Zähne 31 der Zahnstange 30 eine Zahnlänge L2, eine Zahnhöhe H2 und einen Zahnflankenwinkel $\gamma 2$ auf, wobei typischer Weise die Zahnflankenwinkel $\gamma 1$, $\gamma 2$ gleich gewählt sein können, damit zwischen den Zahnflanken der Vortriebzähne 21 und der Zahnstange 30 ein Flächenkontakt ausgebildet sein kann. Angemerkt sei jedoch, dass mindestens eine der Zahnflanken auch eine gewölbte Form aufweisen kann.

Figur 6a zeigt schematisch ein beispielhaftes Größenverhältnis zwischen dem Vortriebzahn 21 und den Zähnen 31 der Zahnstange 30 gemäß den Figuren 1 und 2. Hierbei ist ersichtlich, dass der Abstand A1 zwischen den Vortriebzähnen 21 größer ist als der Abstand A2 der Zähne 31 der Zahnstange 30 und dass die Zahnhöhen H1, H2 sowie die Zahnlängen L1, L2 näherungsweise gleich groß sind.

Eine Vergrößerung der Zähne 31 der Zahnstange 30 im Verhältnis zu den Vortriebzähnen 21 ist Figur 6b zu entnehmen, wobei ebenfalls aus dieser Figur ersichtlich ist, dass mehrere Vortriebzähne 21 in einen Zahnzwischenraum 32 zwischen zwei Zähnen 31 eintauchen können. Durch die Vergrößerung der Zähne 31 der Zahnstange 30 wird die Auflagefläche der Vortriebzähne 21 auf den Zahnflanken 33 der Zähne 31 erhöht, wodurch eine gleichmäßigere Kraftübertragung erfolgen kann.

Bei der in Figur 7b gezeigten Weiterbildung kann es von Vorteil sein, wenn die Zähne 31 der gegenüberliegenden Zahnstangen um, vorzugsweise $\Delta A = \frac{1}{2}$ A2, versetzt angeordnet sind, um eine Erhöhung des Flächenkontaktes, der Belastbarkeit und der Laufruhe zu erreichen. Die gegenüberliegende Zahnstange 30 ist aus Gründen der Vereinfachung nicht dargestellt.

Eine höhere Überdeckung zwischen den Vortriebzähnen 21 und den Zahnflanken 33 der Zähne 31 der Zahnstange 30 kann durch eine Vergrößerung der Zahnlänge L1, bzw. durch eine Vergrößerung der Zahnhöhe H1 erfolgen, wonach gilt: A1 > A2, L1 > L2 und H1 > H2. Durch eine höhere Überdeckung zwischen den Vortriebzähnen 21 und den Zahnflanken 33 kann eine höhere maximale Belastung erreicht werden und die Laufruhe des Linearantriebs 1 erhöht werden.

Bezugszeichenliste

| 1 | Linearantrieb |
| 10 | Nockenwelle |
| 11 | Lagerabschnitt |
| 12 | Verbindungsabschnitt |
| 13 | Antriebswelle |
| 14 | Öffnung |
| 15 | Nockenwellenscheibe |
| 16 | Reibfläche |
| 17 | erster Abschnitt |
| 18 | zweiter Abschnitt |
| 19 | Übergang |
| 20 | Vortriebelement |
| 21 | Vortriebzahn |
| 22 | Fuß |
| 23 | Reibfläche |
| 24 | Zahnspitze |
| 25 | Ausnehmung |
| 26 | Seitenfläche |
| 27 | Querflächen |
| 28 | Kuppe |
| 30 | Zahnstange |
| 31 | Zahn |
| 32 | Zahnzwischenraum |
| 33 | Reibfläche |
| 40 | Zahnstangengehäuse |
| 41 | erster Endbereich |
| 42 | zweiter Endbereich |
| 45 | Führungsausnehmung |
| 46 | Raum |
| 48 | Lager |
| 50 | Schlitten |
| 53 | erstes Gehäuseteil |
| 54 | zweites Gehäuseteil |
| 60 | Antrieb |
| 65 | Getriebe |
| A1 | Abstand |
| A2 | Abstand |
| $\Delta A$ | Versatz |
| B | Breite |
| H | Höhe von 25 |
| H1 | Zahnhöhe |
| H2 | Zahnhöhe |
| L1 | Zahnlänge |
| L2 | Zahnlänge |
| X | Längsachse |
| Y | Querachse |
| Z | Hochachse |
| $\alpha$ | Winkel |
| $\gamma 1$ | Zahnflankenwinkel von 21 |
| $\gamma 2$ | Zahnflankenwinkel von 31 |
| $\phi$ | Umlaufwinkel |

Patentansprüche

1. Linearantrieb (1), aufweisend:

- eine Nockenwelle (10) mit mindestens einer Nockenwellenscheibe (15), die in einer Längsachse (X) angeordnet ist,
- mindestens eine mindestens einen Zahn (31) aufweisende Zahnstange (30), und
- mindestens ein Vortriebelement (20) mit mindestens einem Vortriebzahn (21),
- wobei das mindestens eine Vortriebelement (20) eine Ausnehmung (25) aufweist, in die die Nockenwelle (10) greift,
- wobei die Nockenwelle (10) mittels der mindestens einen Nockenwellenscheibe (15) mit dem mindestens einen Vortriebelement (20) gekoppelt ist, und
- wobei das Vortriebelement (20) bei einer Drehung der Nockenwelle (10) zur Erzeugung eines Vortriebs in die Zahnstange (30) ein- und ausgedrückt werden kann,

**dadurch gekennzeichnet, dass**
der Vortrieb in der Längsachse (X) erzeugt wird.

2. Linearantrieb (1) nach Anspruch 1,
**dadurch gekennzeichnet, dass**
die Ausnehmung (25) das Vortriebelement (20) durchbricht.

3. Linearantrieb (1) nach Anspruch 1 oder 2,
**dadurch gekennzeichnet, dass**
die Nockenwelle (10) das Vortriebelement (20) in der Ausnehmung (25) durchbricht.

4. Linearantrieb (1) nach einem der vorgenannten Ansprüche,
**dadurch gekennzeichnet, dass**
die Nockenwelle (10) mindestens zwei Nockenwellenscheiben (15) aufweist, die in der Längsachse (X) parallel und beabstandet angeordnet sind.

5. Linearantrieb (1) nach einem der vorgenannten Ansprüche,
**dadurch gekennzeichnet, dass**
die mindestens zwei Nockenwellenscheiben (15) um die Längsachse (X) winkelversetzt um einen Winkel ($\alpha$) angeordnet sind.

6. Linearantrieb (1) nach einem der vorgenannten Ansprüche,
**dadurch gekennzeichnet, dass**
die mindestens eine Nockenwellenscheibe (15) um die Längsachse (X) asymmetrisch ausgebildet ist.

7. Linearantrieb (1) nach einem der vorgenannten Ansprüche,
**dadurch gekennzeichnet, dass** eine Reibfläche (16) der Nockenwellenscheibe (15) in der Umlaufrichtung in einem Abstand (A) zu der Längsachse (X) ausgebildet ist, und das die Änderung des Abstandes (A) in mindestens einem ersten Abschnitt (17) näherungsweise linear in einer Umlaufrichtung zunimmt und in mindestens einem zweiten Abschnitt (18) in der Umlaufrichtung linear abnimmt.

8. Linearantrieb (1) nach einem der vorgenannten Ansprüche,
**dadurch gekennzeichnet, dass** der mindestens eine erste Abschnitt (17) und der mindestens eine zweite Abschnitt (18) durch abgerundete Übergänge (19) verbunden sind.

9. Linearantrieb (1) nach einem der vorgenannten Ansprüche,
**dadurch gekennzeichnet, dass** sich der erste Abschnitt (17) über einen ersten Halbkreis erstreckt und dass sich der zweite Abschnitt (18) über einen zweiten Halbkreis erstreckt.

10. Linearantrieb (1) nach einem der vorgenannten Ansprüche,
**dadurch gekennzeichnet, dass** eine Breite (B) der Ausnehmung (25) derart gewählt ist, das die Nockenwellenscheibe (15) näherungsweise spielfrei umgriffen ist.

11. Linearantrieb (1) nach einem der vorgenannten Ansprüche,
**dadurch gekennzeichnet, dass** eine Höhe (H) der Ausnehmung (25) derart gewählt ist, das die Nockenwellenscheibe (15) näherungsweise kontaktfrei ist.

12. Linearantrieb (1) nach einem der vorgenannten Ansprüche,
**dadurch gekennzeichnet, dass** mindestens zwei Zahnstangen (30) vorgesehen sind, und dass die mindestens zwei Zahnstangen (30) zueinander um einen Versatz ($\Delta A$) verschoben angeordnet sind.

13. Linearantrieb (1) nach einem der vorgenannten Ansprüche,
**dadurch gekennzeichnet, dass** mindestens zwei Vortriebzähne (21) und/oder mindestens zwei Vortriebelemente (20) vorgesehen sind.

14. Linearantrieb (1) nach Anspruch 13,
**dadurch gekennzeichnet, dass** die mindestens zwei Vortriebzähne (21) in einer Reihe in einem ersten Abstand (A1) in der Längsachse (X) angeordnet sind, und dass die Zähne (31) der Zahnstange in einer Reihe ein einem zweiten Abstand (A2) entlang der Längsachse (X) angeordnet sind, wobei folgendes gilt:
A1 < A2 oder A1 > A2.

15. Linearantrieb (1) nach einem der vorgenannten Ansprüche,
**dadurch gekennzeichnet, dass**
der jeweilige Vortriebzahn (21) eine größere, gleiche oder kleinere Zahnlänge (L1) und/oder eine größere Zahnhöhe (H1) als der Zahn (31) der Zahnstange (30) aufweist.

16. Linearantrieb (1) nach einem der vorgenannten Ansprüche,
**dadurch gekennzeichnet, dass**
der jeweilige Vortriebzahn (21) und der jeweilige Zahn (31) einen gleichen Zahnflankenwinkel ($\gamma 1$, $\gamma 2$) aufweisen.

17. Linearantrieb (1) nach einem der vorgenannten Ansprüche,
**dadurch gekennzeichnet, dass**
der jeweilige Vortriebzahn (21) ballig ausgebildet ist.

18. Linearantrieb (1) nach einem der vorgenannten Ansprüche,
**dadurch gekennzeichnet, dass**
ein Antrieb (60) vorgesehen ist, der die Nockenwelle

**19.** Linearantrieb (1) nach einem der vorgenannten Ansprüche, **dadurch gekennzeichnet, dass** der Antrieb (60) mit der Nockenwelle (10) über ein Getriebe (65) gekoppelt ist.

**20.** Linearantrieb (1) nach einem der vorgenannten Ansprüche, **dadurch gekennzeichnet, dass** die Nockenwelle (10) und/oder das mindestens eine Vortriebelement (20) an einem Schlitten (50) angeordnet sind bzw. ist.

**21.** Linearantrieb (1) nach einem der vorgenannten Ansprüche, **dadurch gekennzeichnet, dass** der Schlitten (50) das mindestens Vortriebelement (20) in einer Ebene in der Längsachse (X) beweglich abgestützt hält.

**22.** Längsverstelleinheit für einen Sitz, insbesondere für einen Fahrzeugsitz, mit einem Linearantrieb nach einem der vorgenannten Ansprüche.

**23.** Kraftfahrzeug mit einer Längsverstelleinheit nach Anspruch 22.


**Claims**

**1.** Linear drive (1), comprising

- a camshaft (10) having at least one camshaft disc (15) which is arranged in a longitudinal axis (X),
- at least one gear rack (30) having at least one tooth (31), and
- at least one drive element (20) having at least one drive tooth (21),
- wherein the at least one drive element (20) comprises a cutout (25) with which the camshaft (10) engages,
- wherein the camshaft (10) is coupled to the at least one drive element (20) by means of the at least one camshaft disc (15), and
- wherein the drive element (20) can be pressed into and out of the gear rack (30) by means of a rotation of the camshaft (10) in order to generate a driving force, **characterized in that**

the driving force is generated in the longitudinal axis (X).

**2.** Linear drive (1) in accordance with claim 1, **characterized in that** the cutout (25) penetrates the drive element (20).

**3.** Linear drive (1) in accordance with claim 1 or 2, **characterized in that** the camshaft (10) penetrates the drive element (20) in the cutout (25).

**4.** Linear drive (1) in accordance with any of the preceding claims, **characterized in that** the camshaft (10) comprises at least two camshaft discs (15) which are arranged parallel and at a distance to each other in the longitudinal axis (X).

**5.** Linear drive (1) in accordance with any of the preceding claims, **characterized in that** the at least two camshaft discs (15) are arranged around the longitudinal axis (X) angularly offset around an angle ($\alpha$).

**6.** Linear drive (1) in accordance with any of the preceding claims, **characterized in that** the at least one camshaft disc (15) is implemented asymmetrically around the longitudinal axis (X).

**7.** Linear drive (1) in accordance with any of the preceding claims, **characterized in that** a friction surface (16) of the camshaft disc (15) is implemented in the circumferential direction at a distance (A) to the longitudinal axis (X), and **in that** the change of the distance (a) in at least one first section (17) increases approximately linearly in a circumferential direction and, in at least one second section (18), decreases linearly in the circumferential direction.

**8.** Linear drive (1) in accordance with any of the preceding claims, **characterized in that** the at least one first section (17) and the at least one second section (18) are connected by means of rounded transitions (19).

**9.** Linear drive (1) in accordance with any of the preceding claims, **characterized in that** the first section (17) extends over a first semicircle and **in that** the second section (18) extends over a second semicircle.

**10.** Linear drive (1) in accordance with any of the preceding claims, **characterized in that** the width (B) of the cutout (25) is selected such that the camshaft disc (15) is embraced approximately free of play.

**11.** Linear drive (1) in accordance with any of the preceding claims,
**characterized in that**
a height (H) of the cutout (25) is selected such that the camshaft disc (15) is approximately free of contact.

**12.** Linear drive (1) in accordance with any of the preceding claims,
**characterized in that**
at least two gear racks (30) are provided, and **in that** the at least two gear racks (30) are arranged displaced in relation to each other at an offset (ΔA).

**13.** Linear drive (1) in accordance with any of the preceding claims,
**characterized in that**
at least two drive teeth (21) and/or at least two drive elements (20) are provided.

**14.** Linear drive (1) in accordance with claim 13,
**characterized in that**
the at least two drive teeth (21) are arranged in the longitudinal axis (X) in a row and at a first distance (A1), and **in that** the teeth (31) of the gear rack are arranged along the longitudinal axis (X) in a row and at a second distance (A2), wherein the following is true:
A1 < A2 or A1 > A2.

**15.** Linear drive (1) in accordance with any of the preceding claims,
**characterized in that**
the respective drive tooth (21) comprises a longer, the same, or a shorter tooth length (L1) and/or a larger tooth height (H1) that the tooth (31) of the gear rack (30).

**16.** Linear drive (1) in accordance with any of the preceding claims,
**characterized in that**
the respective drive tooth (21) and the respective tooth (31) comprise an identical tooth flank angle (γ1, y2).

**17.** Linear drive (1) in accordance with any of the preceding claims,
**characterized in that**
the respective drive tooth (21) is implemented crowned.

**18.** Linear drive (1) in accordance with any of the preceding claims,
**characterized in that**
a drive (60) is provided which can drive the camshaft (10).

**19.** Linear drive (1) in accordance with any of the preceding claims,
**characterized in that**
the drive (60) is couple to the camshaft (10) by means of a transmission (65).

**20.** Linear drive (1) in accordance with any of the preceding claims,
**characterized in that**
the camshaft (10) and/or the at least one drive element (20) is or are arranged on a carriage (50).

**21.** Linear drive (1) in accordance with any of the preceding claims,
**characterized in that**
the carriage (50) retains the at least one drive element (20) moveably supported in a plane in the longitudinal axis (X).

**22.** Longitudinal adjustment unit for a seat, in particular for a vehicle seat, having a linear drive in accordance with any of the preceding claims.

**23.** Motor vehicle having a longitudinal adjustment unit in accordance with claim 22.

**Revendications**

**1.** Entraînement linéaire (1) comprenant :

- un arbre à cames (10) ayant au moins un disque d'arbre à cames (15) installé selon un axe longitudinal (X),
- au moins une crémaillère (30) comportant au moins une dent (31), et
- au moins un élément d'avancement (20) avec au moins une dent d'avancement (21),
- au moins cet élément d'avancement (20) a un évidement (25) dans lequel pénètre l'arbre à cames (10),
- l'arbre à cames (10) étant couplé par au moins ce disque d'arbre à cames (15) avec au moins cet élément d'avancement (20), et
- l'élément d'avancement (20), lors de la rotation de l'arbre à cames (10) est engagé et dégagé de la crémaillère (30) pour générer un avancement,

entraînement **caractérisé en ce que**
l'avancement est généré selon l'axe longitudinal (X).

**2.** Entraînement linéaire (1) selon la revendication 1,
**caractérisé en ce que**
l'évidement (25) traverse l'élément d'avancement (20).

**3.** Entraînement linéaire (1) selon la revendication 1 ou 2,

**caractérisé en ce que**
l'arbre à cames (10) traverse l'élément d'avancement (20) dans l'évidement (25).

4. Entraînement linéaire (1) selon l'une des revendications précédentes, **caractérisé en ce que**
l'arbre à cames (10) comporte au moins deux disques d'arbre à cames (15) installés parallèlement et de manière écartée selon l'axe longitudinale (X).

5. Entraînement linéaire (1) selon l'une des revendications précédentes, **caractérisé en ce que**
au moins les deux disques d'arbre à cames (15) sont décalés angulairement d'un angle (α) autour de l'axe longitudinal (X).

6. Entraînement linéaire (1) selon l'une des revendications précédentes, **caractérisé en ce que**
au moins le disque d'arbre à cames (15) est asymétrique par rapport à l'axe longitudinal (X).

7. Entraînement linéaire selon l'une des revendications précédentes, **caractérisé par**

une surface de frottement (16) du disque d'arbre à cames (15) qui est à une distance (A) dans la direction périphérique par rapport à l'axe longitudinal (X), et
la variation de la distance (A) dans au moins un premier segment (17) augmente de manière sensiblement linéaire dans un sens de rotation et dans un second segment (18) elle diminue de façon linéaire dans le sens de rotation.

8. Entraînement linéaire (1) selon l'une des revendications précédentes, **caractérisé en ce que**
au moins le premier segment (17) et au moins le second segment (18) ont des transitions (19) arrondies.

9. Entraînement linéaire (1) selon l'une des revendications précédentes, **caractérisé en ce que**
le premier segment (17) s'étend sur un premier demi-cercle et le second segment (18) s'étend sur un second demi-cercle.

10. Entraînement linéaire (1) selon l'une des revendications précédentes, **caractérisé en ce que**
la largeur (B) de l'évidement (25) est choisie pour que le disque d'arbre à cames (15) soit entouré pratiquement sans jeu.

11. Entraînement linéaire (1) selon l'une des revendications précédentes, **caractérisé en ce que**
la hauteur (H) de l'évidement (25) est choisie pour que le disque d'arbre à cames (15) soit pratiquement sans contact.

12. Entraînement linéaire (1) selon l'une des revendications précédentes, **caractérisé par**
au moins deux crémaillères (30) et au moins ces deux crémaillères (30) sont décalées l'une par rapport à l'autre d'un décalage (ΔA).

13. Entraînement linéaire (1) selon l'une des revendications précédentes, **caractérisé par**
au moins deux dents d'avancement (21) et/ou au moins deux éléments d'avancement (20).

14. Entraînement linéaire (1) selon la revendication 13, **caractérisé en ce que**
au moins les deux dents d'avancement (21) sont disposées dans une première rangée avec une première distance (A1) selon l'axe longitudinal (X), et les dents (31) de la crémaillère sont disposées dans une rangée à une seconde distance (A2) selon l'axe longitudinal (X), définies par les relations suivantes :
A1 < A2 ou A1 > A2.

15. Entraînement linéaire (1) selon l'une des revendications précédentes, **caractérisé en ce que**
la dent d'avancement (21) respective a une longueur de dent (L1) plus grande, égale ou inférieure et/ou une hauteur de dent (H1) plus grande que la dent (31) de la crémaillère (30).

16. Entraînement linéaire (1) selon l'une des revendications précédentes, **caractérisé en ce que**
la dent d'avancement (21) respective et la dent (31) respective ont un même angle de flanc de dent (γ1, γ2).

17. Entraînement linéaire (1) selon l'une des revendications précédentes, **caractérisé en ce que**
la dent d'avancement (21) respective est bombée.

18. Entraînement linéaire (1) selon l'une des revendications précédentes, **caractérisé par**
un entraînement (60) pour entraîner l'arbre à cames (10).

19. Entraînement linéaire (1) selon l'une des revendications précédentes, **caractérisé en ce que**
l'entraînement (60) est couplé à l'arbre à cames (10) par une transmission (65).

20. Entraînement linéaire (1) selon l'une des revendications précédentes, **caractérisé en ce que**
l'arbre à cames (10) et/ou au moins un élément d'avancement (20) est ou sont prévus sur un chariot (50).

21. Entraînement linéaire (1) selon l'une des revendications précédentes, **caractérisé en ce que**
le chariot (50) soutient de manière mobile selon l'axe longitudinal (X) au moins l'élément d'avancement (20), dans un plan.

22. Unité de réglage longitudinal d'un siège, notamment d'un siège de véhicule comportant un entraînement linéaire selon l'une des revendications précédentes.

23. Véhicule automobile équipé d'une unité de réglage longitudinal selon la revendication 22.

Fig. 1

Fig. 2

Fig. 3

Fig. 4

# Fig. 5

# Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3640197 A1
- DE 4208948 C2
- DE 19642655 C2
- DE 19815283 A1

- DE 102004013009 A1
- DE 102006052936 A1
- EP 0612935 A1